# EUROPEAN PATENT SPECIFICATION

(11) **EP 3 896 881 B1**
(45) Date of publication and mention of the grant of the patent: **30.08.2023**
(21) Application number: 19895451.3
(22) Date of filing: 22.10.2019
(51) Int. Cl.: G06F 11/10, H04L 1/1867, H04L 1/1829

(54) **HARQ DATA STORAGE MANAGEMENT METHOD AND DEVICE AND HARQ DATA BUFFER**
HARQ-DATENSPEICHERVERWALTUNGSVERFAHREN UND VORRICHTUNG SOWIE HARQ-DATENPUFFER
PROCÉDÉ ET DISPOSITIF DE GESTION DE STOCKAGE DE DONNÉES DE HARQ ET MÉMOIRE TAMPON DE DONNÉES DE HARQ

(30) Priority: 10.12.2018 CN 201811504209
(43) Date of publication of application: 20.10.2021
(73) Proprietor: Sanechips Technology Co., Ltd., Shenzhen, Guangdong 518055 (CN)
(72) Inventor: LIU, Xing, Shenzhen, Guangdong 518055 (CN); JIANG, Yan, Shenzhen, Guangdong 518055 (CN); ZENG, Xianjun, Shenzhen, Guangdong 518055 (CN)
(74) Representative: Canzler & Bergmeier Patentanwälte Partnerschaft mbB
(86) International application number: PCT/CN2019/112553
(87) International publication number: WO 2020/119252

(56) References cited:
- WO-A1-2012/092717
- WO-A2-2011/136528

## Description

### Technical Field

Embodiments of the present invention relate to, but are not limited to, a Hybrid Automatic Repeat request (HARQ) data storage technology, and in particular, to an HARQ data storage management method and device, and an HARQ data cache.

### Background

When data retransmission is performed based on the HARQ technology, a large amount of HARQ data needs to be stored; when the data amount of the HARQ data to be stored is large, in the related art, an HARQ data cache may be used to store the HARQ data; however, in the solution of using the HARQ data cache to store the HARQ data, the correct data of the Cyclic Redundancy Check (CRC) is also outputted to the HARQ data cache, thus reducing the utilization rate of the HARQ data cache and increasing the power consumption of the HARQ data cache. International Patent Application Publication No. WO 2012/092717 A1 discloses apparatuses and methods for hybrid automatic repeat request (HARQ) buffering optimization. A wireless communications device is provided with a first cache unit coupled to a memory unit, a wireless communications module, and a hybrid automatic repeat request (HARQ) combine component coupled to the first cache unit. The wireless communications module receives from a cellular network a wireless signal carrying first data corresponding to an HARQ process. The HARQ combine component reads second data corresponding to the HARQ process from the memory unit into the first cache unit, and combines the first data and the second data for an HARQ combining procedure.

### Summary

Embodiments of the present invention provide an HARQ data storage management method and device, and an HARQ data cache, which can improve the utilization rate of the HARQ data cache and reduce the power consumption of the HARQ data cache. The features of the HARQ data storage management method and device, and the HARQ data cache according to the present invention are defined in the independent claims, and the preferable features according to the present invention are defined in the dependent claims.

To achieve the above object, the technical solutions of the embodiments of the present invention are implemented as follows:
Provided is an HARQ data storage management method, which is applied to an HARQ data cache. The method comprises: when performing first transmission or retransmission based on an HARQ, receiving operation control information, wherein when performing first transmission or non-last retransmission based on the HARQ, the received operation control information comprises a write command and write data, and the write data received each time is HARQ data incorrectly decoded; when performing the first retransmission or the non-last retransmission based on the HARQ, storing the write data according to the write command.

The present invention further provides an device for managing HARQ data storage, and the device is located in a HARQ data cache, and the device includes a receiving unit and a processing unit, wherein the receiving unit is configured to receive operation control information when it is determined that header transmission or retransmission is performed based on HARQ; wherein, when header transmission or non-last retransmission is performed based on HARQ, the received operation control information comprises a write command and write data, and the write data received each time is HARQ data of a decoding error; a processing unit, configured to store the write data according to the write command when it is determined to perform a first transmission or a non-last retransmission based on the HARQ.

The present invention further provides an HARQ data cache comprising any of the above HARQ data storage management devices.

Provided are an HARQ data storage management method and device, and an HARQ data cache. The method comprises: when performing first transmission or retransmission based on an HARQ, receiving operation control information, wherein when performing first transmission or non-last retransmission based on the HARQ, the received operation control information comprises a write command and write data, and the write data received each time is HARQ data incorrectly decoded; when performing the first retransmission or the non-last retransmission based on the HARQ, storing the write data according to the write command. In this way, the data received by the HARQ data cache each time is the HARQ data incorrectly decoded, and does not comprise the HARQ data with a correct decoding error; furthermore, when the HARQ data cache only stores the HARQ data incorrectly decoded, the power consumption of the HARQ data cache can be reduced, and the utilization rate of the HARQ data cache can be improved.

### Brief Description of the Drawings

Fig. 1 is a schematic diagram of a HARQ process in the related art;
Fig. 2A is a schematic diagram of a storage management solution of HARQ data in the related art;
Fig. 2B is a schematic diagram of another storage management solution of HARQ data in the related art;
Fig. 3 is a schematic diagram of system architecture for implementing an HARQ storage management scheme according to an embodiment of the present invention;
Fig. 4 is a flowchart of a method for storing and managing HARQ data;
Fig. 5 is a schematic diagram of an internal structure of a single write channel in a first HARQ data cache according to an embodiment of the present invention;
Fig. 6 is a schematic diagram of an internal structure of a single read channel in a first HARQ data cache according to an embodiment of the present invention;
Fig. 7 is a schematic diagram of an internal structure of a single write channel in a second HARQ data cache according to an embodiment of the present invention;
Fig. 8 is a schematic diagram of an internal structure of a single read channel in a second HARQ data cache according to an embodiment of the present invention;
Fig. 9 is a schematic diagram of a composition structure of an HARQ data storage management device.

### Detailed Description of the Embodiments

In the related art, the basic principle of the HARQ comprises: 1. at the receiving end, among all errors, the errors that can be corrected are corrected by using a Forward Error Correction (FEC) technology; 2. the erroneous data packets cannot be corrected are determined through error detection; 3. the data packets cannot be corrected are discarded, and request the transmitter to retransmit the same data packets.

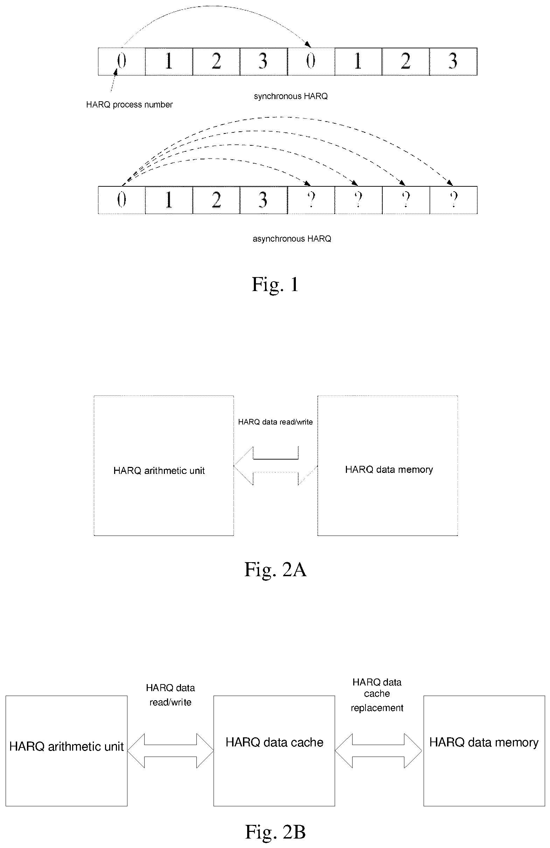

An HARQ technology can be used in 3G, 4G and 5G wireless communication systems, and the specific time of HARQ retransmission can be determined by a synchronous HARQ protocol or an asynchronous HARQ protocol. Fig. 1 is a schematic diagram of a HARQ process in the related art, and in Fig. 1, the numbers 0 to 3 respectively represent different process numbers. Referring to Fig. 1, for the synchronous HARQ protocol, the retransmission is performed at a predefined time, and a receiving end does not need to be notified of a retransmitted process; for the asynchronous HARQ protocol, the retransmission can be performed at any available time after the previous transmission, and the receiving end needs to be notified of a specific retransmission process number.

The key words for HARQ are storage, request retransmission, and combined demodulation. For the HARQ technology, in the case where decoding fails, a receiver needs to store HARQ data and requires a sender to retransmit the data, and the receiver combines the retransmitted data and the previously stored HARQ data and then decodes the data, so that a certain combination gain is generated, the number of retransmissions can be reduced, and thus a time delay is reduced; however, a traditional Automatic Repeat-request (ARQ) technology simply discards incorrect data and does not store the incorrect data, therefore there is no data combination process, and also there is no diversity gain, and excessive retransmission and waiting for a too long time are often required. That is to say, the HARQ technology can efficiently compensate the code error caused by adopting link adaptation, improve the data transmission rate, and reduce the data transmission delay. However, the HARQ technology needs to store a large amount of HARQ data and manage HARQ retransmission. Taking Long Term Evolution (LTE) as an example, it is assumed that the HARQ data has a data width of 8 bits, the entire communication system needs to support a large number of User Equipment (UE), each UE has 8 processes, and the amount of HARQ read and output by each process of each UE is 24 times of the decoding result (Turbo decoding code rate 1/3).

Fig. 2A is a schematic diagram of a storage management solution of HARQ data in the related art. As shown in Fig. 2A, an HARQ arithmetic unit directly stores the HARQ data in an HARQ memory, and then directly reads the HARQ data output last time from the HARQ memory during each retransmission; the storage management scheme shown in Fig. 2A is relatively simple in design and is effective in a scenario with small traffic. For example, in a 3G or 4G system, a demand for a capacity of an HARQ memory is very small, and the traffic is also very small. The storage management scheme shown in Fig. 2A can be implemented by using a Static Random-Access Memory (SRAM) on a chip. That is, in a scenario with small traffic, the storage management scheme shown in Fig. 2A is a relatively suitable scheme from the perspective of performance and power consumption.

However, with the evolution of communication protocols and the increase of the capacity of communication systems, for example, in a Pre5G/5G system, the capacity of a communication system is greatly increased, and the amount of HARQ data needing to be cached is also greatly increased, so that the capacity of an HARQ memory is also sharply increased; and if a storage management scheme shown in Fig. 2A is also used, a large area cost of an SRAM needs to be paid. Therefore, only the off-chip memory scheme can be used to store the HARQ data, for example, double data rate synchronous dynamic random access memory (DDR SDRAM) can be used to store the HARQ data; however, in this case, the HARQ data occupies a considerable bandwidth of the DDR, and in a general communication system, the DDR uses a shared storage manner, resulting in a limited bandwidth for other programs to access the DDR. In addition, this also causes a sharp increase in power consumption of the communication system, resulting in very poor economics of this solution.

For the problem of the storage management solution shown in Fig. 2A, a hierarchical storage solution is proposed; the hierarchical storage scheme is described below with reference to the accompanying drawings; Fig. 2B is a schematic diagram of another storage management solution of HARQ data in the related art. As shown in Fig. 2B, when receiving new data of an encoding block, an HARQ arithmetic unit writes the new data into an HARQ data Cache and a channel decoder; the HARQ data cache writes the new data into a data memory of the HARQ data cache or write the new data into an external HARQ data memory. when receiving retransmission data of an encoding block, the HARQ arithmetic unit acquires previous data corresponding to the retransmission data from the data memory of the HARQ data cache or the external HARQ data memory, combines the retransmission data and the previous data, and writes the combined data into the HARQ data cache and a channel decoder; the HARQ data cache writes the combined data into the data memory of the HARQ data cache or the external HARQ data memory.

When implementing the storage management solution shown in Fig. 2B, a cache solution in a computer system architecture is used for reference, and a specific implementation of the storage management solution shown in Fig. 2B is described in two aspects: a write operation and a read operation.

Write operation: for the first transmission or the retransmission, the HARQ arithmetic unit writes the HARQ data into the HARQ data cache according to the output address of the previous retransmission.

If it is a write hit, the HARQ data is directly written into a corresponding cache line in the HARQ data cache, and the Cache Line is marked according to a CRC result (if the CRC result of decoding of the code block is correct, then the Cache Line is marked as correct; if the CRC result is an error, then the Cache Line is marked as an error). Note that instead of directly recording the CRC result, firstly the CRC pointer is recorded, and then after the decoding result is output, the CRC result is written into the pointer address.

If it is a write miss, a Cache Line is reallocated to the HARQ data according to a certain rule.

If the newly allocated Cache Line does not store data, the HARQ data is written into the Cache Line and the CRC result is marked.

If the newly allocated Cache Line stores data, and the CRC result of the data in the Cache Line is correct, the HARQ data is written into the Cache Line and the CRC result is marked.

If the newly allocated Cache Line stores data, and the CRC result of the data in the Cache Line is incorrect, whether to execute a replacement operation is determined based on the parameter configuration.

When it is determined to execute the replacement operation, the original data is written out to the HARQ data memory such as the DDR, and then the current write data is written into the Cache Line. When it is determined not to execute the replacement operation, the data that needs to be written is directly written out to the HARQ data memory such as the DDR.

Read operation: during retransmission, the HARQ arithmetic unit reads the HARQ data from the HARQ data cache according to the output address of the previous retransmission.

If it is a read hit, the data of the corresponding Cache Line in the HARQ data cache is directly read out.

If it is a read miss, a Cache Line is reallocated to the HARQ data according to a certain rule.

If the newly allocated Cache Line does not store data, the HARQ data read from the HARQ data memory such as the DDR is written into the Cache Line, and then the data in the Cache Line is read and sent to the HARQ arithmetic unit.

If the newly allocated Cache Line stores data, and the CRC result of the data in the Cache Line is correct, the HARQ data read from the HARQ data memory such as the DDR is written into the Cache Line, and then the data in the Cache Line is read and sent to the HARQ arithmetic unit.

If the newly allocated Cache Line stores data, and the CRC result of the data in the Cache Line is incorrect, whether to execute a replacement operation is determined based on the parameter configuration.

When it is determined to execute the replacement operation, the original data in the Cache Line is written into an HARQ data memory such as a DDR, then the data to be read is written into the Cache Line, and then the data in the Cache Line is read and sent to the HARQ arithmetic unit. When it is determined not to execute the replacement operation, the data to be read is directly read from the HARQ data memory such as the DDR, and is sent to the HARQ arithmetic unit.

It can be seen that the storage management solution shown in Fig. 2B has the following problems:
1. In this solution, the data with a correct CRC result may also be output to an HARQ data cache. Although the data with the correct CRC result may be covered during reading and writing, many unnecessary power consumption may also be increased.
2. After a read miss or a write miss, a Cache Line is reallocated. The Cache Line may be reallocated randomly that is commonly used in the art or based on a Least Recently Used (LRU). However, no state of data in a current Cache Line is considered before allocation in this solution regardless of allocation. Therefore, a Cache Line of data with a wrong CRC result may be randomly allocated, and data with an incorrect CRC result is the data that must be read in the near future; regardless of whether the replacement operation is performed, the data is always replaced with an external HARQ data memory, and at this time, there is no data in the Cache Line or a request for data with a correct CRC result in the Cache Line, thereby increasing unnecessary power consumption and occupying the bandwidth of the external HARQ data memory.
3. The write-and-replace operation is unreasonable. Data with an incorrect CRC result definitely needs to be read, and data output earlier is more likely to be read; therefore, when data that has been output to the HARQ data cache is replaced with data written out to the HARQ data cache later, the implementation is complex, and additional access to an external HARQ data storage is caused.
4. After a read miss occurs, data is written into the HARQ data cache, and then is read, thereby wasting unnecessary power consumption, occupying a Cache Line of the HARQ data cache, and reducing the utilization rate of the Cache Line.
5. No data failure operation, a UE always occupies the assigned Cache Line; if the last retransmission decoding of a certain UE is incorrect, the HARQ space output by the UE is always occupied until the UE is replaced or reallocated to another UE for use, which also results in a decrease in the utilization rate of the Cache Line and an increase in unnecessary power consumption.

In addition, based on analysis, the HARQ data has the following characteristics:
1. The HARQ data of the code block which is correctly decoded will not be read.
2. The HARQ data of the code block which is incorrectly decoded must be read, and will be read only once.
3. The HARQ data will not be read immediately after being written into the memory, and it may be read after a long period of time. For example, in an LTE system, the HARQ data only be read after8 TTIs, i.e., 8 ms; moreover, the HARQ data that is first written out to the memory is first read, i.e., there is no data locality principle that is characteristic of computer system cache data.
4. If a HARQ data is not read after being output for more than a certain period of time, it can be considered that an abnormality occurs in the communication system or a UE is lost, and the data can never be read.

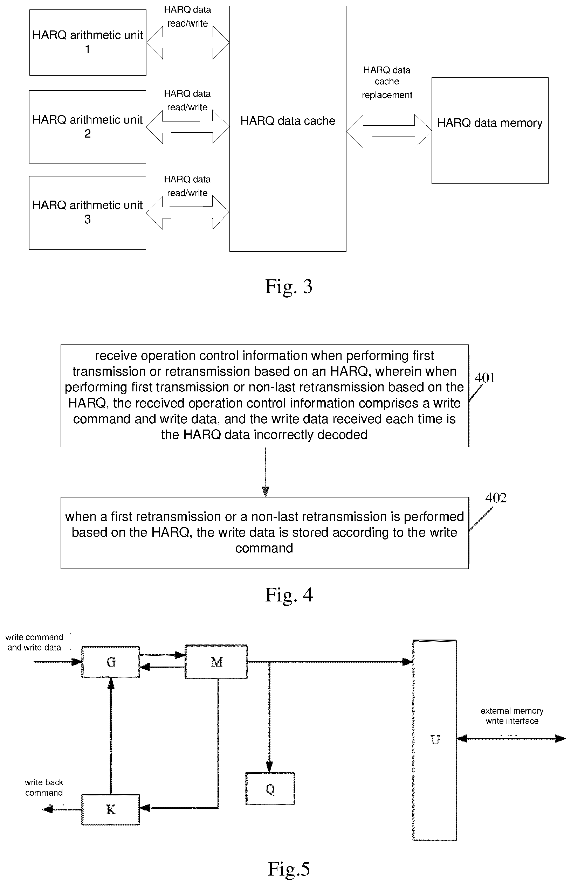

Aiming at the problems existing in the described storage management solution, and according to the characteristics of the described HARQ data, an embodiment of the present invention proposes an HARQ data storage solution; Fig. 3 is a schematic diagram of a system architecture for implementing an HARQ storage management scheme according to an embodiment of the present invention. In the present invention, by means of a read/write arbitration mechanism, a plurality of HARQ arithmetic units can be simultaneously supported; in Fig. 3, the HARQ arithmetic unit 1, the HARQ arithmetic unit 2 and the HARQ arithmetic unit 3 represent three different HARQ arithmetic units; the HARQ arithmetic unit 1, the HARQ arithmetic unit 2 and the HARQ arithmetic unit 3 can share the same HARQ data cache, thereby expanding the application scenarios; the HARQ data cache may be connected to a HARQ data memory.

It should be noted that Fig. 3 merely exemplarily describes the number of HARQ arithmetic units, and the embodiment of the present invention does not limit the number of HARQ arithmetic units.

Based on the above-described contents, the following embodiments are proposed.

### Embodiment one

The embodiment of the present invention provides an HARQ data storage management method, which may be applied to an HARQ data cache.

As an implementation manner, the HARQ data cache may comprise a plurality of Cache Lines for storing HARQ data, and an addressing mode of a Cache in a computer system may be used for reference, but the embodiment of the present invention does not limit the size of a Cache Line and the number of ways in the cache; the more the ways are, the more the Cache Lines that can be written into each address are, and the higher the cache efficiency is, the higher the implementation difficulty is; the smaller the Cache Line is, the higher the space utilization rate is, and the fewer the storage bubbles are. However, the higher the implementation difficulty is, and the lower the bus utilization rate for external memory interaction is.

Each way contains several Cache lines; on the Cache lines, several bits with the lowest read/write addresses are offset, which represents an internal address offset of the Cache Line. For example, if the size of the Cache Line is 16 bytes, 4 bits with the lowest read/write address is an offset; the lowest several bits, except offset, of the read/write addresses are indexes. The cache can address a Cache Line of each way through the indexes; therefore, each read/write address can correspond to a fixed Cache Line through the indexes in each way.

In the embodiments of the present invention, in addition to data storage, each Cache Line is further provided with several flag bits, which are described as follows: 1) Valid, and the flag indicates whether data in the Cache Line is valid. In an example, when the Valid is set to 1, it indicates that the data is valid, and when the Valid is set to 0, it indicates that the data is invalid.
2) Clean, If the data is valid, this flag indicates whether the data in the Cache Line has a backup in an external memory (for example, the foregoing HARQ data memory), and this flag is a flag possessed by a standard Cache. However, the method for using the secondary logo in the embodiment of the present invention is different from that of a standard Cache; in an example, when the Clean is set to 1, it indicates that the data has a backup in the external memory, and when the Clean is set to 0, it indicates that the data has no backup in the external memory.
3) Tag, if the data is valid, this flag is the address high bit of the data within the Cache Line (the remaining bits except the index and offset).
4) Time, this flag represents the data writing time, and this flag is a unique flag set in the embodiment of the present invention.

Fig. 4 is a flowchart of an HARQ data storage management method according to the present invention. As shown in Fig. 4, the flow may comprise: Step 401: receiving operation control information when a first transmission or a retransmission is performed based on HARQ, wherein the received operation control information comprises a write command and write data when the first transmission or a non-last retransmission is performed based on HARQ, and the write data received each time is HARQ data incorrectly decoded.

In conjunction with Fig. 3, in actual implementation, when processing each process task, an HARQ arithmetic unit can read HARQ data from an HARQ data cache or an HARQ data storage according to a configured HARQ read address (corresponding to a read operation), and can also output data to the HARQ data cache or the HARQ data storage according to a configured HARQ output address (corresponding to a write operation).

As an implementation method, when performing first transmission or retransmission based on HARQ, an HARQ arithmetic unit may send operation control information to an HARQ data cache; when performing first transmission based on HARQ, operation control information sent by an HARQ arithmetic unit to an HARQ data cache only comprises a write command and write data, and does not comprise a read command; that is to say, when performing the first transmission based on the HARQ, the HARQ arithmetic unit only outputs the HARQ data, and does not read the HARQ data. Retransmission based on HARQ may comprise the retransmission which is not the last time, and the retransmission which is the last time; when the non-last retransmission is performed based on HARQ, operation control information sent by an HARQ arithmetic unit to an HARQ data cache may comprise a write command and write data, and may also comprise a read command; that is to say, when the non-last retransmission is performed based on the HARQ, the HARQ arithmetic unit reads both the HARQ data and the HARQ data.

As an implementation method, when the last retransmission is performed based on HARQ, operation control information sent by an HARQ arithmetic unit to an HARQ data cache only comprises a read command, and does not comprise a write command and write data; that is to say, when the last retransmission is performed based on the HARQ, the HARQ arithmetic unit only reads the HARQ data and does not output the HARQ data.

In the present invention, when the first transmission or the non-last retransmission is performed based on HARQ, the HARQ arithmetic unit can judge a decoding result of a code block, and only the decoded incorrect HARQ data is used as write data and sends the HARQ data to an HARQ data cache, and the decoded correct HARQ data is not sent to the HARQ data cache; in this way, compared with the storage management solution of the HARQ data in the related art, the power consumption of the HARQ data cache can be reduced, and the utilization rate of the HARQ data cache can be improved.

Step 402: Store the write data according to the write command when a first retransmission or a non-last retransmission is performed based on the HARQ.

The writing strategy of the HARQ data in the present invention will be exemplarily described below.

When an HARQ arithmetic unit needs to output HARQ data, sending a write command and write data to an HARQ data cache; during actual implementation, when performing the first transmission or the last retransmission based on the HARQ, the HARQ arithmetic unit sends write commands and write data to the HARQ data cache, wherein each write command corresponds to a data volume of one Cache Line.

Further, if the write command is configured to write through (namely, indicating that the write data needs to be stored to the external memory), the write data may be written to the external memory while the write data is written to the HARQ data cache; in this way, the write data can be backed up to the external memory in advance, so that the idle bandwidth of the external memory can be sufficient, and instantaneous high-traffic access can be avoided. In the present invention, the external memory may be the foregoing HARQ data memory, for example, the external memory may be a DDR SDRAM.

In a practical application, a write command may be configured as write-through according to a proportion. In this way, an idle bandwidth may be used, and in a case in which storage of an HARQ cache is not full, HARQ data is gradually backed up to an external memory, thereby preventing instantaneous high-traffic access to the external memory after the storage of the HARQ cache is full.

For the implementation of storing the write data according to the write command, exemplarily, the write data may be output to an external memory when it is determined that a first set condition is satisfied; the first set condition is that: a write miss is determined according to the write command, data stored in each Cache Line of the HARQ data cache is marked as valid, and the data stored in each Cache Line of the HARQ data cache is not backed up in the external memory.

When it is determined that the first set condition is not satisfied, writing the write data into one Cache Line of the HARQ data cache.

Further, when it is determined that the first set condition is not met and the write command indicates that the write data needs to be stored in the external memory, the write data is output to the external memory.

As an implementation, an implementation of writing the write data into one Cache Line of the HARQ data cache when it is determined that the first set condition is not satisfied may include:
When a write hit is determined according to the write command, writing the write data into a Cache Line corresponding to the write command; when it is determined a write miss according to the write command and data stored in at least one Cache Line of the HARQ data cache is marked as invalid, writing the write data into any Cache Line stored data marked as invalid, and marking the write data as valid;
determining a write miss according to the write command, wherein data stored in each Cache Line of the HARQ data cache is marked as valid, and when data stored in at least one Cache Line of the HARQ data cache is backed up in the external memory, selecting one Cache Line from the Cache Lines in which stored data is backed up in the external memory; writing the write data into the selected Cache Line, and marking the write data as valid.

When in a specific implementation, a write address may be determined according to a write command, and a flag of a corresponding Cache Line in each way is all read out according to an index in the write address, and if a tag of a certain Cache Line therein is equal to a high bit of a write address of this time, and a valid flag indicates that data is valid, it indicates that a write hit occurs, and at this time, write data needs to be written into the corresponding Cache Line, and a write time is written into a Time flag of the Cache Line; if the write command is configured to write through, the write data also needs to be written out to the external memory, and at the same time, the Clean flag of the Cache Line is set to 1, which indicates that the data has a backup in the external HARQ data memory; otherwise, if the write command is not configured to write through, the Clean flag of the Cache Line is set to 0. Each write operation hits only one Cache Line at most.

If there is no write hit, then it is a write miss. When a write is missing, firstly determining whether a Cache Line corresponding to the index in each way has data marked as invalid (which can be determined by means of a valid flag), and if so, selecting one Cache Line from the Cache Lines storing the data marked as invalid; writing write data into the selected Cache Line, writing a write time into a Time flag of the Cache Line, writing a high address bit into a Tag flag, and setting a Valid flag to 1; if the write command is configured to write through, the write data also needs to be written out to the external memory, and at the same time, the Clean flag of the Cache Line is set to 1, which indicates that the data has a backup in the external HARQ data memory; otherwise, if the write command is not configured to write through, the Clean flag of the Cache Line is set to 0.

If the data stored in the Cache Line corresponding to the index in each way is marked as valid, it is determined that the stored data in each Cache Line has a backup in the external memory (it may be determined by using the Clean flag), and if yes, a Cache Line is selected on each Cache Line on which the stored data has a backup in the external memory; writing write data into the selected Cache Line, writing a write time into a Time flag of the Cache Line, writing a high address bit into a Tag flag, and setting a Valid flag to 1; if the write command is configured to write through, the write data also needs to be written out to the external memory, and at the same time, the Clean flag of the Cache Line is set to 1, which indicates that the data has a backup in the external HARQ data memory; otherwise, if the write command is not configured to write through, the Clean flag of the Cache Line is set to 0.

If the data stored in the Cache Line corresponding to the index in each way is marked as valid, and the stored data in each Cache Line is not backed up in the external memory, the write data is directly written out to the external memory, without performing any write replacement operation. Because the data in the Cache is the previously written HARQ data and is read more firstly than this written data, it needs to preferentially ensure that the previously written data remains in the Cache, which is a fundamental difference between the HARQ data cache and the computer Cache in the embodiment of the present invention, and the computer system Cache is the most likely to be read. However, in the embodiment of the present invention, in the HARQ data cache, the first HARQ data stored in the HARQ data cache is most likely to be read, and therefore only the addressing process of the computer system Cache is advised, and the replacement policy of the HARQ data in the related art and other operations are not advised.

Further, in the embodiment of the present invention, an aging operation can also be performed on the data stored in the HARQ data cache, and when the storage time of the data in the HARQ cache is too long, the data is invalid, so as to release the Cache Line; that is to say, when it is determined that a cache line to be aged exists in the HARQ data cache, the data stored in the Cache Line to be aged is marked as invalid, wherein the data marked as invalid is data to be released; the Cache Line that needs to be aged is a Cache Line satisfying the following condition: a data storing duration exceeds an aging threshold. In practical applications, the aging threshold can be set according to practical application scenarios.

During actual implementation, the time difference between the Time of the Cache Line corresponding to each way and the current moment may be judged every time the HARQ data cache reads and writes, and if the time difference exceeds the configured aging threshold. Furthermore, if the Valid flag of the data stored in the corresponding Cache Line is 1, it indicates that the data stored in the Cache Line is not read for a long time, and it is considered that the data stored in the Cache Line is never read, and at this time, the Valid flag of the data stored in the Cache Line may be set to 0, and the space of the Cache Line is released, so as to avoid waste of space.

The reading strategy of the HARQ data in the embodiment of the present invention will be exemplarily described below.

When the retransmission is performed based on the HARQ, the HARQ data may be read according to the read command.

As an implementation method, when a non-last retransmission is performed based on HARQ, an HARQ arithmetic unit needs to first read HARQ data and then output the HARQ data; that is to say, for the HARQ data cache, after the HARQ data is read according to the read command, the write data is stored according to the write command.

With regard to an implementation method for reading HARQ data according to the read command, exemplarily, when a read hit is determined according to the read command, the HARQ data can be read from a Cache Line corresponding to the read command; marking the data stored in the cache line corresponding to the read command as invalid, or releasing the data stored in the cache line corresponding to the read command. That is to say, in this embodiment of the present invention, a read failure operation may be performed according to a feature that the HARQ data is read only once, that is, after a read hit occurs, the Cache Line is released.

When in a specific implementation, a read address may be determined according to a read command, and a flag of a Cache Line corresponding to an index in each way is read according to an index in the read address, and if a tag of a certain Cache Line is equal to a high level of the current write address. Furthermore, if the valid flag indicates that the data is valid, it indicates a read hit, the data stored in the corresponding Cache Line is read out, and the Valid flag of the data stored in the corresponding Cache Line is set to 0, which indicates that the data has failed, and the corresponding Cache Line may also be released. A read failure operation is also an essential difference between the HARQ data cache and the computer Cache in the embodiments of the present invention. The HARQ data only needs to be read once, and the data read recently by the computer system is most likely to be read again; therefore, in the embodiments of the present invention, a read failure policy is used to release the space as soon as possible, so that the occupation of the storage space by invalid data can be avoided, and the waste of the space is caused.

In an embodiment, when a read miss is determined according to the read command, the HARQ data may be read from the external memory according to the read command; exemplarily, after the HARQ data is read from the external memory according to the read command, the HARQ data may be directly output without performing data replacement on the read HARQ data in the HARQ data cache. When in a specific implementation, if there is no read hit, it is a read miss; and when there is a read miss, corresponding HARQ data is directly read from an external memory, and the read data is output to an HARQ arithmetic unit, and the data stored

in a cache is not replaced with the read data again. This is because the HARQ data is only read once, and replacing the data stored in the cache causes a waste of space.

The present invention can be applied to a high-speed and high-bandwidth large-capacity HARQ data cache. The present invention fully consider the features of HARQ data and in conjunction with the advantages of the cache of a computer system, make the HARQ data cycle in the cache to the maximum extent, so as to reduce reading and writing to an external memory, thus reduce occupation of an external storage area bandwidth, and reduce power consumption. Furthermore, the present invention achieve the effect of further reducing the read-write bandwidth of the HARQ data, improving the utilization rate of the HARQ data cache, saving the read-write bandwidth of the external memory, saving the power consumption and area, and improving the economic benefit.

### Embodiment two

To better reflect the objective of the present invention, a further example is given based on the first embodiment of the present invention.

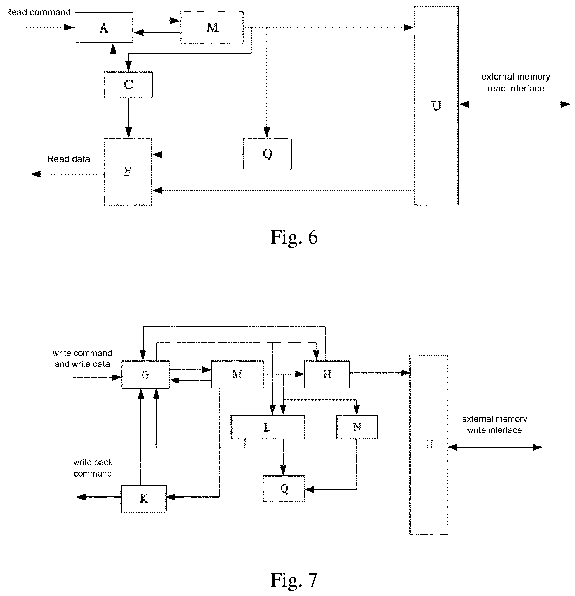

In the embodiment of the present invention, a structure of an HARQ data cache may be exemplarily illustrated through Figs. 5 and 6. Fig. 5 is a schematic diagram of an internal structure of a single write channel in a first HARQ data cache according to an embodiment of the present invention, and Fig. 6 is a schematic diagram of an internal structure of a single read channel in a first HARQ data cache according to an embodiment of the present invention; in Figs. 5 and 6, different functional modules are represented by blocks marked with different letters, and functional modules marked with respective letters are described below.

Module A: configured to receive and parse a reading command sent by an HARQ arithmetic unit, wherein each HARQ arithmetic unit corresponds to one Module A. Module C: configured to perform order-preserving processing on a command for reading an external HARQ data memory and an internal HARQ data cache, wherein each HARQ arithmetic unit corresponds to one Module C.

Module F: configured to, according to the output of the Module C, select to output the data read from the external HARQ data memory or the data read from the internal HARQ data cache, each HARQ arithmetic unit corresponding to one Module F. Module G: configured to receive and parse a write command and write data sent by an HARQ arithmetic unit, wherein each HARQ arithmetic unit corresponds to one Module G.

Module K: configured to receive and cache a write-back command returned to the HARQ arithmetic unit, wherein each HARQ arithmetic unit corresponds to one Module K.

Module M: configured to arbitrate read/write commands sent by a plurality of Modules A or a plurality of Modules G, wherein the arbitration method used comprises, but is not limited to, priority arbitration or fair arbitration modes such as Round-Bobin arbitration, and the Module M is further configured to perform a corresponding operation on the arbitrated read/write commands according to the read/write policy of the embodiments of the present invention.

Module Q: configured to read and write data of the internal HARQ data cache sequentially according to the read command and the write command output by the Module M.

Module U: configured to receive a read command after arbitration and TAG judgment, and if there is no read hit, an external HARQ data memory can be read via an external memory read interface, and returned data is sequentially returned to the corresponding module F; in addition, write commands after arbitration and TAG determination are received, and if there is no write hit or if write through is configured, data can be written to an external HARQ data memory.

Wherein the Module M, Module Q and Module U are read-write sharing modules, and the HARQ data cache respectively has the Module M, Module Q and Module U; the remaining modules are single-channel independent modules, and each read channel or write channel has a corresponding module (Module A, Module C, Module F, Module G, and Module K).

Referring to Fig. 5, the writing flow of the HARQ data cache may comprise the following steps:
Step 51: the HARQ arithmetic unit sends the write command and the write data to its corresponding Module G according to the configured HARQ write address.
Step 52: after receiving the write command, the Module G sends the write command and the write data to the Module M to perform arbitration and a corresponding operation if the Module K is not fully stored and the Module U is ready.
Step 53: the Module M arbitrates the arbitration requests of the plurality of modules G according to a certain arbitration mechanism (not limited to arbitration mechanisms such as Round-Robin and priority arbitration); if the request from the arbitration module G is passed, the write-back command is sent to the corresponding Module K, and the Module K receives the write-back command and sends it to the corresponding HARQ arithmetic unit. At the same time, the Module M reads out, according to the index of the write address, the flag of the Cache Line corresponding to the index in each way, and performs TAG judgment; the TAG judgment of the Module M can be processed in series or in parallel, specifically, step 54 to step 58.
Step 54: concurrently or serially determining all Cache Lines, and if a valid flag of a certain Cache Line is 1, and a difference between the Time flag of the certain Cache Line and a current time (which may be obtained simply by counting at the current time) exceeds a configured aging threshold, it is considered that data of the Cache Line has aged, a corresponding valid needs to be set to 0, and a storage space of the Cache Line is released.
Step 55: concurrently or serially determining all cache lines, and if a valid flag of a certain cache line is 1 and a tag flag is equal to a high bit of a write address this time, indicating a write hit, sending write command write data to a Module Q, and at the same time, updating a write moment to a Time flag of the cache line. If the write command is configured to write through, the write command and the write data also need to be sent to the Module U, and at the same time, the Clean flag of the Cache Line is updated to 1, which indicates that the data is backed up in the external memory; otherwise, the Clean flag of the Cache Line is set to 0. If there is no write hit, then for a write miss, the write miss operation can be seen from step 56 to step 58.
Step 56: in a write miss, sequentially determining a valid flag of each Cache Line in series; if the valid flag of one Cache Line is 0, sending a write command and write data to a Module Q, and at the same time, updating a write time to the Time flag of the Cache Line, writing a write address high bit into a Tag flag, and finally updating the corresponding valid flag to 1. If the write command is configured to write through, the write command and the write data also need to be sent to the Module U, and at the same time, the Clean flag of the Cache Line is updated to 1, which indicates that the data is backed up in the external memory; otherwise, the Clean flag of the Cache Line is set to 0.
Step 57: if the valid flags of all the Cache Line are 1, sequentially determining the Clean flag of each Cache Line in series; if the Clean flag of one Cache Line is 1, sending the write command and the write data to the Module Q, and at the same time, updating the write time to the Time flag of the Cache Line, and writing high bits of the write address into the Tag flag. If the write command is configured to write through, the write command and the write data also need to be sent to the Module U, and at the same time, the Clean flag of the Cache Line is updated to 1, which indicates that the data is backed up in the external memory; otherwise, the Clean flag of the Cache Line is set to 0.
Step 58: if the Valid flags of all the Cache Lines are 1 and the Clean flags of all the Cache Lines are 0, directly send the write command and the write data to the corresponding Module U.
Step 59: the Module U receives the write command and the write data from the Module M, and sends the write data to the external memory.
Step 510: the Module Q writes the write command and the write data into the HARQ data cache according to the write command sent by the Module M, and after this step is completed, the Module M can accept the next command request.

Referring to Fig. 6, the reading flow of the HARQ data cache may include the following steps:
Step 61: the HARQ arithmetic unit sends a read command to the corresponding module according to the configured HARQ read address.
Step 62: after receiving the read command, the Module A sends a command to the Module M to apply for arbitration if the Module C is not fully stored and the Module U is ready.
Step 63: the Module M arbitrates the arbitration requests of the plurality of Modules A according to a certain arbitration mechanism (not limited to arbitration mechanisms such as Round-Robin and priority arbitration). If the arbitration request of the Module A is passed, the tag of the Cache Line corresponding to the index in each way is read out according to the index of the address to perform TAG determination. The read operation TAG may be determined through serial processing or parallel processing, which is specifically as Step 64 to Step 66.
Step 64: judge all cache lines in parallel or in series, and if a valid flag of a certain cache line is 1, and a difference between a time flag of the certain cache line and a current time (which may be obtained simply by counting at the current time) exceeds a configured aging threshold, consider that data of the cache line has aged. The corresponding valid flag needs to be set to 0, and the storage space of the Cache Line is released.
Step 65: concurrently or serially determining all Cache Line, if the Valid flag of a certain Cache Line is 1 and the Tag flag is equal to the high bit of the current write address, indicating a read hit, setting the Valid in the Cache Line flag to 0, and releasing the Cache Line. At the same time, sending a read command to a Module Q, so as to indicate that HARQ data is read from an internal HARQ data cache; meanwhile, the corresponding read sequence mark is sent to the corresponding Module C. If there is no read hit, then a read miss occurs, and the read miss operation can be seen at step 66.
Step 66: when the reading fails, a reading command is directly sent to the Module U, indicating that the HARQ data is read from the external memory, and at the same time, a corresponding reading sequencing mark is sent to a corresponding Module C. Step 67: the Module U receives the read command sent by the module M, reads the data back from the external memory, and sends the data to the corresponding Module F according to the sending order.
Step 68: the Module Q reads the data from the inner HARQ data cache according to the reading command sent from the Module M, and sends the data to the corresponding Module F.
Step 69: if the Module C has a read sequence mark, the Module C reads the mark in turn and sends the read sequence mark to the corresponding Module F.
Step 610: according to the flag sent by the Module C, the Module F selects to send the data received by the Module Q or the Module U to the corresponding HARQ arithmetic unit.

### Embodiment three

In order to better reflect the objective of the present invention, further examples are illustrated on the basis of the foregoing embodiments of the present invention.

It can be seen that with regard to the structure of the HARQ data cache as shown in Figs. 5 and 6, it is necessary to perform TAG judgment and cache data reading/writing serial processing on a plurality of HARQ arithmetic units, and the latter command can be arbitrated only after the former command completely completes the cache data reading/writing; such design is simple, but the water circulation period is too long, and the data bandwidth cannot be further improved. With regard to the described problem, in a third embodiment of the present invention, an extended structure of an HARQ data cache can be proposed on the basis of Figs. 5 and 6. By adding various order-maintaining queue modules and cache modules, TAG determination and the flow of reading and writing operations of cache data can be processed by means of water, and while a former command performs reading and writing of cache data, the latter command can perform arbitration and TAG determination. In this way, the flowing period is shortened, the processing bandwidth is increased, and the time sequence convergence is further facilitated, so as to support a larger memory capacity.

In addition, when multiple HARQ arithmetic units simultaneously perform a read/write operation, a read/write command is interleaved, and a read/write hit and a read/write miss occur randomly. The architecture can avoid mutual blocking between commands of different HARQ arithmetic units as far as possible, thereby guaranteeing a processing bandwidth.

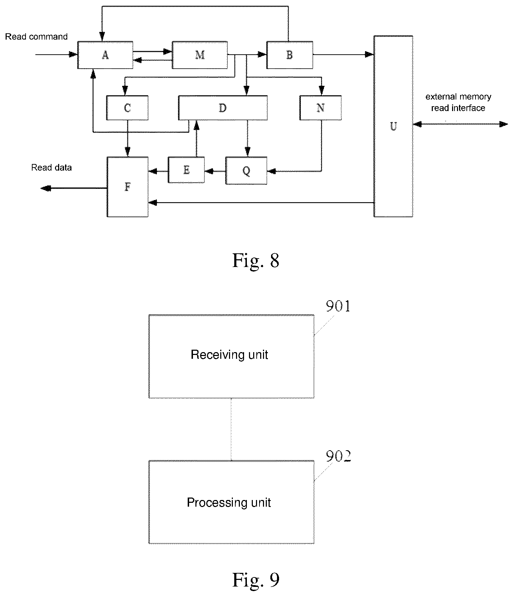

The extension structure of the data cache will be exemplarily described below with reference to Figs. 7 and 8. Fig. 7 is a schematic diagram of an internal structure of a single write channel in a second HARQ data cache according to an embodiment of the present invention, and Fig. 8 is a schematic diagram of an internal structure of a single read channel in a second HARQ data cache according to an embodiment of the present invention; in Figs. 7 and 8, different functional modules are represented by blocks marked with different letters, and functional modules marked with respective letters are described below.

Module A: configured to receive a reading command sent from a parsing HARQ arithmetic unit, wherein each HARQ arithmetic unit corresponds to one Module A.

Module B: configured to receive a reading command for reading the external memory from the cache, and each HARQ arithmetic unit corresponds to one Module B.

Module C: arranged to perform order-preserving processing on commands of reading external memory and reading internal HARQ data caches, each HARQ arithmetic unit corresponding to one Module C.

Module D: configured to receive a reading command for reading the internal HARQ data cache from the cache, and each HARQ arithmetic unit corresponds to one Module D.

Module E: configured to cache data read from an internal HARQ data cache, and each HARQ arithmetic unit corresponds to one Module E.

Module F: according to the output of the Module C, selecting whether to output the data read from the external memory or to read the data read from the internal HARQ data cache, each HARQ arithmetic unit corresponding to one Module F.

Module G: configured to receive a write command and write data sent from a parsing HARQ arithmetic unit, wherein each HARQ arithmetic unit corresponds to one Module G.

Module H: configured to receive a write command for caching and writing external memory and write data, wherein each HARQ arithmetic unit corresponds to one Module H.

Module L: configured to receive a write command for caching writing an internal HARQ data cache and write data, wherein each HARQ arithmetic unit corresponds to one Module L.

Module K: configured to receive a write-back command returned by the cache to the HARQ arithmetic unit, wherein each HARQ arithmetic unit corresponds to one Module K.

Module M: configured to arbitrate the read/write commands sent by a plurality of Modules A and Modules G, and arbitrates the read/write commands by adopting a fair arbitration manner not limited to priority arbitration or Round-Bobin arbitration. Then, the arbitrated read/write commands are subjected to corresponding operations according to the read/write strategy of the embodiment of the present invention.

Module N: performing order-preserving processing on read/write operations of a plurality of sources processed by the Module M, wherein this module is a key module separating a TAG judging operation (performing a corresponding operation according to a read/write strategy of the embodiments of the present invention) and a data read/write operation.

Module Q: configured to receive a read/write command from each of the Modules D and the Modules L in sequence according to the output of the Module N, so as to complete the reading/writing of the data of the internal HARQ data cache.

Module U: sends the read commands sent by each Module B to the external memory, returns the returned data to the corresponding Module F in turn according to the order in which the commands are received, and sends the write commands and the write data sent by each Module H to the external memory.

Herein the Module M, Module Q, Module N and Module U are read-write sharing modules, and the HARQ data cache respectively has Module M, Module Q, Module N and Module U; the remaining modules are single-channel independent modules, and each read channel or write channel has a corresponding module.

Referring to Fig. 7, the writing process of the HARQ data cache may include the following steps:
Step 71: the HARQ arithmetic unit sends the write command and the write data to its corresponding Module G according to the configured HARQ write address.
Step 72: after receiving the read command, the Module G sends the write command and the write data to the Module M for arbitration and corresponding operations in the case that none of the Module H, the Module L, and the Module K is fully stored.
Step 73: the Module M arbitrates the arbitration requests of the plurality of Modules G according to a certain arbitration mechanism (not limited to arbitration mechanisms such as Round-Robin and priority arbitration). If the request from the quorum Module G is passed, a write-back command is sent to a corresponding Module K; the Module K receives the write-back command and sends same to a corresponding HARQ arithmetic unit; at the same time, the Module M reads out a flag of a Cache Line corresponding to an index in each way according to the index of the address so as to perform TAG judgment; and the TAG judgment can be processed in series or in parallel by means of a write operation, which is specifically as shown in steps 74 to 78.
Step 74: concurrently or serially determining all Cache Lines, and if a valid flag of a certain Cache Line is 1, and a difference between the Time flag of the certain Cache Line and a current time (which may be obtained simply by counting at the current time) exceeds a configured aging threshold, it is considered that data of the Cache Line has aged, a corresponding Valid needs to be set to 0, and a storage space of the Cache Line is released.
Step 75: concurrently or serially determining all cache lines, and if a valid flag of a certain cache line is 1 and a Tag flag is equal to a high bit of a write address this time, indicating a write hit, sending write command write data to a corresponding Module L, and at the same time, updating a write moment to a Time flag of the cache line. If the write command is configured to write through, the write command and the write data also need to be sent to the Module H, and at the same time, the Clean flag of the Cache Line is updated to 1, indicating that the data is backed up in the external memory; otherwise, the Clean flag of the Cache Line is set to 0. Meanwhile, the read/write ordering flag also needs to be sent to the Module N. If there is no write hit, then for a write miss, the write miss operation can be seen from step 76 to step 78.
Step 76: when a write is missing, sequentially determining a valid flag of each Cache Line in series; if the valid flag of one Cache Line is 0, sending a write command and write data to a Module L, and at the same time, updating a write time to the Time flag of the Cache Line, writing a write address high bit into a Tag flag, and finally updating the corresponding valid flag to 1. If the write command is configured to write through, the write command and the write data also need to be sent to the Module H, and at the same time, the Clean flag of the Cache Line is updated to 1, indicating that the data is backed up in the external memory; otherwise, the Clean flag of the Cache Line is set to 0. Meanwhile, the read/write ordering flag also needs to be sent to the Module N.
Step 77: if the valid flags of all the Cache Line are 1, sequentially determining the Clean flag of each Cache Line in series; if the Clean flag of one Cache Line is 1, sending the write command and the write data to the Module L, at the same time, updating the write time to the Time flag of the Cache Line, and writing the high write address into the Tag flag. If the write command is configured to write through, the write command and the write data also need to be sent to the Module H, and at the same time, the Clean flag of the Cache Line is updated to 1, indicating that the data is backed up in the external memory; otherwise, the Clean flag of the Cache Line is set to 0. Meanwhile, the read/write ordering flag also needs to be sent to the Module N.
Step 78: if the Valid flags of all the Cache Lines are 1 and the Clean flags of all the Cache Lines are 0, directly send the write command and the write data to the corresponding Module H.
Step 79: the Module U receives the write command and the write data sent by the Module H, arbitrates the write data with the write command of other Modules H, and sends the data to the external memory.
Step 710: if there is a read/write ordering flag in the Module N, the Module N reads the read/write ordering flag in turn and sends the read/write ordering flag to the Module Q.
Step 711: the Module Q selects from Module D or Module L to read the read/write command according to the flag sent by the Module N. If it is the write timing of the write command read from the Module L, then write the data into the HARQ data cache according to the write command.

Referring to Fig. 8, the reading process of the HARQ data cache may include the following steps:
Step 81: the HARQ arithmetic unit sends a read command to the corresponding module according to the configured HARQ read address.
Step 82: after receiving the read command, the A sends a command to the Module M to apply for arbitration in the case that both the Module B and the Module D are full.
Step 83: the Module M arbitrates the arbitration requests of the plurality of Modules A according to a certain arbitration mechanism (not limited to arbitration mechanisms such as Round-Robin and priority arbitration). If the arbitration request of the Module A is passed, the tag of the Cache Line corresponding to the index in each way is read out according to the index of the address to perform TAG determination. The read operation TAG determination may be processed serially or may be processed in parallel, specifically, as shown in Step 84 to Step 86.
Step 84: concurrently or serially determine all Cache Lines, and if a valid flag of a certain Cache Line is 1, and a difference between a Time flag of the certain Cache Line and a current time (which may be obtained simply by counting at the current time) exceeds a configured aging threshold, it is considered that data of the Cache Line has aged. The corresponding valid flag needs to be set to 0, and the storage space of the Cache Line is released.
Step 85: concurrently or serially determining all Cache Line, if the Valid flag of a certain Cache Line is 1 and the Tag flag is equal to the high bit of the current write address, indicating a read hit, setting the Valid in the Cache Line flag to 0, and releasing the Cache Line. At the same time, sending a read command to a Module D for indicating that HARQ data is read from an internal HARQ data cache; meanwhile, the corresponding read sequence mark is sent to the corresponding Module C. Meanwhile, send the corresponding read/write ordering flag to the Module N. If there is no read hit, then a read miss occurs, and the read miss operation may proceed to step 86.
Step 86: when the reading is missing, a reading command is directly sent to a corresponding Module B, indicating that the HARQ data is read from an external memory, and at the same time, a corresponding reading sequencing mark is sent to a corresponding Module C.
Step 87: the Module U receives the read command of the Module B, arbitrates with the read requests of other Module Bs, sends the read command to the external memory, and then sends the data to the corresponding Module F according to the sending order.
Step 88: if there is a read/write ordered flag in the Module N, the Module N reads the flag in turn and sends the read/write ordered flag to the Module Q.
Step 89: the Module Q selects from Module D or Module L to read the read/write command according to the flag sent by the Module N. If the read command is a read command from the Module D, the data is read according to the read command when the corresponding Module E is not fully stored, and the data is sent to the corresponding Module E.
Step 810: if the Module C has a read sequence mark, the Module C reads the mark in turn and sends the mark to the corresponding Module F.
Step 811: the Module F selects the slave Module E or the Module U to receive and send data to the corresponding HARQ arithmetic unit according to the flag sent by the Module C.

### Embodiment four

On the basis of the HARQ data storage management method provided in the foregoing embodiments of the present invention, a fourth embodiment of the present invention provides an HARQ data storage management device. The device is located in an HARQ data cache.

Fig. 9 is a schematic structural diagram of an HARQ data storage management device according to an embodiment of the present invention. As shown in Fig. 9, the device includes a receiving unit 901 and a processing unit 902,
A receiving unit 901, configured to receive read/write operation control information when it is determined to perform first transmission or retransmission based on HARQ, wherein when the first transmission or a non-last retransmission is performed based on the HARQ, the received read/write operation control information comprises a write command and write data, and the write data received each time is HARQ data incorrectly decoded;

A processing unit 902, configured to store the write data according to the write command when it is determined to perform a first transmission or a non-last retransmission based on the HARQ.

In an implementation, the HARQ data cache comprises a plurality of Cache Line for storing HARQ data; accordingly, the processing unit 902 is specifically configured to output the write data to an external memory when it is determined that a first set condition is satisfied; when it is determined that a first set condition is not satisfied, writing the write data into one Cache Line of the HARQ data cache; the first set condition is that: a write miss is determined according to the write command, data stored in each Cache Line of the HARQ data cache is marked as valid, and the data stored in each Cache Line of the HARQ data cache is not backed up in the external memory.

In an implementation, the processing unit 902 is further configured to output the write data to the external memory when it is determined that the first set condition is not satisfied and the write command indicates that the write data needs to be stored in the external memory.

In one embodiment, the processing unit 902 is specifically configured to: when it is determined, according to the write command, that a write hit occurs, write the write data into a Cache Line corresponding to the write command; when it is determined a write miss according to the write command and data stored in at least one Cache Line of the HARQ data cache is marked as invalid, writing the write data into any Cache Line stored data marked as invalid, and marking the write data as valid; determining a write miss according to the write command, wherein data stored in each Cache Line of the HARQ data cache is marked as valid, and when data stored in at least one Cache Line of the HARQ data cache is backed up in the external memory, selecting one Cache Line from the Cache Lines in which stored data is backed up in the external memory; writing the write data into the selected Cache Line, and marking the write data as valid.

In an implementation, the processing unit 902 is further configured to, when it is determined that a cache line to be aged exists in the HARQ data cache, mark data stored in the cache line to be aged as invalid; the Cache Line that needs to be aged is a Cache Line satisfying the following condition: a data storing duration exceeds an aging threshold.

In an embodiment, when a non-last retransmission is performed based on the HARQ, the received read/write operation control information further includes a read command; when the last retransmission is performed based on the HARQ, the received read/write operation control information is a read command;

Accordingly, the processing unit 902 is further configured to read the HARQ data according to the read command when it is determined that the retransmission is performed based on the HARQ.

In an implementation, the HARQ data cache comprises a plurality of Cache Line for storing HARQ data;

Accordingly, the processing unit 902 is specifically configured to:
When a read hit is determined according to the read command, reading HARQ data from a Cache Line corresponding to the read command; marking the data stored in the cache line corresponding to the read command as invalid, or releasing the data stored in the Cache Line corresponding to the read command;
When a read miss is determined according to the read command, the HARQ data is read from the external memory according to the read command.

In an embodiment, the processing unit 902 is further configured to directly output the HARQ data after reading the HARQ data from the external memory according to the read command.

In an embodiment, the processing unit 902 is specifically configured to, when it is determined that a non-last retransmission is performed based on HARQ, after reading the HARQ data according to the read command, store the write data according to the write command.

In a practical application, the receiving unit 901 may be implemented by using a data communication device of the HARQ data cache, and the processing unit 902 may be implemented by using an arbiter in the HARQ data cache in combination with a cache.

In addition, each function module in this embodiment may be integrated into one processing unit, or each unit may exist alone physically, or two or more units are integrated into one unit. The integrated unit may be implemented in a form of hardware, and may also be implemented in a form of a software functional module.

The present invention provides an HARQ data cache, including any one of the HARQ data storage management devices described in the foregoing embodiments.

Those skilled in the art should understand that the present invention may be provided as a method and as a device.

Therefore, the present invention may take the form of a hardware embodiment, a software embodiment, or an embodiment combining software and hardware.

### Industrial applicability

Provided are an HARQ data storage management method and device, and an HARQ data cache. The method comprises: when performing first transmission or retransmission based on an HARQ, receiving operation control information, wherein when performing first transmission or non-last retransmission based on the HARQ, the received operation control information comprises a write command and write data, and the write data received each time is HARQ data incorrectly decoded; when performing the first retransmission or the non-last retransmission based on the HARQ, storing the write data according to the write command. In this way, the data received by the HARQ data cache each time is the HARQ data incorrectly decoded, and does not comprise the HARQ data with a correct decoding error; furthermore, when the HARQ data cache only stores the HARQ data incorrectly decoded, the power consumption of the HARQ data cache can be reduced, and the utilization rate of the HARQ data cache can be improved.

## Claims

1. A Hybrid Automatic Repeat request, HARQ, data storage management method, operating in Long Term Evolution, LTE, or 5G system, applied to an HARQ data cache, the method comprising:
receiving operation control information when performing first transmission or retransmission based on an HARQ, wherein when performing the first transmission or non-last retransmission based on the HARQ, the received operation control information comprises a write command and write data, and
the write data received each time is HARQ data incorrectly decoded (401);
when performing the first retransmission or the non-last retransmission based on the HARQ, storing the write data according to the write command (402), wherein when the non-last retransmission is performed based on HARQ, the received operation control information further comprises a read command;
when the last retransmission is performed based on the HARQ, the received operation control information is a read command;
accordingly, the method further comprises:
when the retransmission is performed based on the HARQ, reading HARQ data according to the read command;
**characterized in that**, the HARQ data cache comprises a plurality of Cache Line for storing HARQ data;
accordingly, the step of reading the HARQ data according to the read command comprises:
when a read hit is determined according to the read command, reading HARQ data from a Cache Line corresponding to the read command; marking data stored in the Cache Line corresponding to the read command as invalid,
or releasing data stored in the Cache Line corresponding to the read command;
when a read miss is determined according to the read command, reading the HARQ data from the external memory according to the read command.

2. The method according to claim 1, wherein the HARQ data cache comprises a plurality of cache lines for storing HARQ data;
accordingly, the step of storing the write data according to the write command comprises:
outputting the write data to an external memory when determining that a first set condition is satisfied, and the first set condition is that: determining a write miss according to the write command, data stored in each Cache Line of the HARQ data cache is marked as valid, and the data stored in each Cache Line of the HARQ data cache is not backed up in the external memory;
when it is determined that the first set condition is not satisfied, writing the write data into one Cache Line of the HARQ data cache.

3. The method according to claim 2, wherein the method further comprises:
when it is determined that the first set condition is not satisfied and the write command indicates that the write data needs to be stored in the external memory, outputting the write data to the external memory.

4. The method according to claim 2, wherein the step of writing the write data into one Cache Line of the HARQ data cache when it is determined that the first set condition is not satisfied comprises:
when a write hit is determined according to the write command, writing the write data into a Cache Line corresponding to the write command;
when it is determined a write miss according to the write command and data stored in at least one Cache Line of the HARQ data cache is marked as invalid, writing the write data into any Cache Line stored data marked as invalid, and marking the write data as valid;
determining a write miss according to the write command, wherein data stored in each Cache Line of the HARQ data cache is marked as valid, and
when data stored in at least one Cache Line of the HARQ data cache is backed up in the external memory, selecting one Cache Line from the Cache Lines in which stored data is backed up in the external memory; writing the write data into the selected Cache Line, and marking the write data as valid.

5. The method according to claim 1, wherein the method further comprises:
outputting the HARQ data directly after reading the HARQ data from the external memory according to the read command;
wherein the storing the write data according to the write command comprises:
when the non-last retransmission is performed based on the HARQ, after reading the HARQ data according to the read command, storing the write data according to the write command.

6. The method according to claim 1, further comprising: when it is determined that a cache line that needs to be aged exists in the HARQ data cache, marking data stored in the cache line that needs to be aged as invalid,
wherein the data marked as invalid is data to be released; the Cache Line that needs to be aged is a Cache Line satisfying the following condition: a data storing duration exceeds an aging threshold.

7. A Hybrid Automatic Repeat request, HARQ, data storage management device, operating in LTE or 5G system, wherein the device is located in an HARQ data cache, and the device comprises a receiving unit and a processing unit,
a receiving unit (901), configured to receive operation control information when it is determined to perform first transmission or retransmission based on HARQ, wherein when the first transmission or a non-last retransmission is performed based on HARQ, the received operation control information comprises a write command and write data, and the write data received each time is HARQ data incorrectly decoded;
a processing unit (902), configured to store the write data according to the write command when it is determined to perform a first transmission or a non-last retransmission based on the HARQ,
wherein when the non-last retransmission is performed based on HARQ, the received operation control information further comprises a read command; when the last retransmission is performed based on the HARQ, the received operation control information is a read command;
accordingly, the processing unit (902) is further configured to read the HARQ data according to the read command when it is determined that the retransmission is performed based on the HARQ;
**characterized in that**, the HARQ data cache comprises a plurality of Cache Line for storing HARQ data;
accordingly, the processing unit (902) is further configured to:
when a read hit is determined according to the read command, read HARQ data from a Cache Line corresponding to the read command; mark data stored in the cache line corresponding to the read command as invalid, or release the data stored in the cache line corresponding to the read command;
when a read miss is determined according to the read command, read the HARQ data from the external memory according to the read command.

8. The device according to claim 7, wherein the HARQ data cache comprises a plurality of cache lines for storing HARQ data;
accordingly, the processing unit (902) is further configured to output the write data to an external memory when it is determined that a first set condition is satisfied; when it is determined that a first set condition is not satisfied, writing the write data into one Cache Line of the HARQ data cache; the first set condition is that: a write miss is determined according to the write command, and data stored in each Cache Line of the HARQ data cache is marked as valid, and the data stored in each Cache Line of the HARQ data cache is not backed up in the external memory.

9. The device according to claim 8, wherein
the processing unit (902) is further configured to output the write data to the external memory when it is determined that the first set condition is not satisfied and the write command indicates that the write data needs to be stored in the external memory;
or, wherein the processing unit (902) is further configured to:
when a write hit is determined according to the write command, write the write data into a Cache Line corresponding to the write command;
when a write miss is determined according to the write command and data stored in at least one Cache Line of the HARQ data cache is marked as invalid, write the write data into any Cache Line stored data marked as invalid, and marking the write data as valid;
when a write miss is determined according to the write command, and data stored in each Cache Line of the HARQ data cache is marked as valid, and
data stored in at least one Cache Line of the HARQ data cache is backed up in the external memory, select one Cache Line from the Cache Lines in which stored data is backed up in the external memory; write the write data into the selected Cache Line, and mark the write data as valid.

10. The device according to claim 9, wherein the processing unit (902) is further configured to directly output the HARQ data after reading the HARQ data from an external memory according to the read command;
wherein the processing unit (902) is further configured to, when it is determined to perform non-last retransmission based on HARQ, after reading the HARQ data according to the read command, store the write data according to the write command.

11. The device according to claim 7, wherein the processing unit (902) is further configured to: when it is determined that a cache line that needs to be aged exists in the HARQ data cache, mark data stored in the cache line that needs to be aged as invalid, wherein the data marked as invalid is data to be released; the Cache Line that needs to be aged is a Cache Line satisfying the following condition: a data storing duration exceeds an aging threshold.

## Patentansprüche

1. Hybrides automatisches Wiederholungsanforderungs- (HARQ) Datenspeichermanagementverfahren, das in einem Long Term Evolution-(LTE-) oder 5G-System arbeitet und auf einen HARQ-Datencache angewendet wird, wobei das Verfahren Folgendes umfasst:
Empfangen von Betriebssteuerinformationen, wenn eine erste Übertragung oder eine Neuübertragung auf der Grundlage eines HARQ durchgeführt wird,
wobei die empfangenen Betriebssteuerinformationen einen Schreibbefehl und Schreibdaten umfassen, wenn die erste Übertragung oder die nicht-letzte Neuübertragung auf der Grundlage des HARQ durchgeführt wird, und die jedes Mal empfangenen Schreibdaten fehlerhaft dekodierte HARQ-Daten sind (401);
beim Durchführen der ersten Neuübertragung oder der nicht-letzten Neuübertragung auf der Grundlage des HARQ, Speichern der Schreibdaten gemäß dem Schreibbefehl (402),
wobei, wenn die nicht-letzte Neuübertragung auf der Grundlage von HARQ durchgeführt wird, die empfangene Betriebssteuerungsinformation ferner einen Lesebefehl umfasst; wenn die letzte Neuübertragung auf der Grundlage von HARQ durchgeführt wird, die empfangene Betriebssteuerungsinformation ein Lesebefehl ist;
dementsprechend umfasst das Verfahren weiterhin:
wenn die Neuübertragung auf der Grundlage des HARQ durchgeführt wird, Lesen der HARQ-Daten gemäß dem Lesebefehl;
**dadurch gekennzeichnet, dass** der HARQ-Daten-Cache eine Vielzahl von Cache-Zeilen zum Speichern von HARQ-Daten umfasst;
gemäß dem Lesebefehl umfasst dementsprechend der Schritt des Lesens der HARQ-Daten:
wenn ein Lesetreffer gemäß dem Lesebefehl festgestellt wird, Lesen von HARQ-Daten aus einer Cache-Zeile, die dem Lesebefehl entspricht;
Markieren von Daten, die in der Cache-Zeile gespeichert sind, die dem Lesebefehl entspricht, als ungültig, oder Freigeben von Daten, die in der Cache-Zeile gespeichert sind, die dem Lesebefehl entspricht;
wenn ein Lesefehler gemäß dem Lesebefehl festgestellt wird, Lesen der HARQ-Daten aus dem externen Speicher gemäß dem Lesebefehl.

2. Verfahren nach Anspruch 1, wobei der HARQ-Daten-Cache eine Vielzahl von Cache-Zeilen zum Speichern von HARQ-Daten umfasst;
gemäß dem Schreibbefehl umfasst dementsprechend der Schritt des Speicherns der Schreibdaten:
Ausgeben der Schreibdaten an einen externen Speicher, wenn festgestellt wird, dass eine erste vorgegebene Bedingung erfüllt ist, und die erste vorgegebene Bedingung darin besteht, dass: ein Schreibfehler gemäß dem Schreibbefehl festgestellt wird, in jeder Cache-Zeile des HARQ-Daten-Caches gespeicherte Daten als gültig markiert sind und die in jeder Cache-Zeile des HARQ-Daten-Caches gespeicherten Daten nicht im externen Speicher gesichert sind;
wenn festgestellt wird, dass die erste vorgegebene Bedingung nicht erfüllt ist, Schreiben der Schreibdaten in eine Cache-Zeile des HARQ-Daten-Cache.

3. Verfahren nach Anspruch 2, wobei das Verfahren ferner umfasst:
wenn festgestellt wird, dass die erste vorgegebene Bedingung nicht erfüllt ist und der Schreibbefehl anzeigt, dass die Schreibdaten in dem externen Speicher gespeichert werden müssen, Ausgabe der Schreibdaten an den externen Speicher.

4. Verfahren nach Anspruch 2, wobei der Schritt des Schreibens der Schreibdaten in eine Cache-Zeile des HARQ-Daten-Caches umfasst, wenn festgestellt wird, dass die erste vorgegebene Bedingung nicht erfüllt ist:
wenn ein Schreibtreffer gemäß dem Schreibbefehl festgestellt wird,
Schreiben der Schreibdaten in eine Cache-Zeile, die dem Schreibbefehl entspricht;
wenn festgestellt wird, dass ein Schreibfehler gemäß dem Schreibbefehl vorliegt und Daten, die in mindestens einer Cache-Zeile des HARQ-Daten-Caches gespeichert sind, als ungültig markiert sind, Schreiben der Schreibdaten in jede Cache-Zeile, in der Daten gespeichert sind, die als ungültig markiert sind, und Markieren der Schreibdaten als gültig;
Bestimmen eines Schreibfehlers gemäß dem Schreibbefehl, wobei Daten, die in jeder Cache-Zeile des HARQ-Daten-Caches gespeichert sind, als gültig markiert werden, und wenn Daten, die in mindestens einer Cache-Zeile des HARQ-Daten-Caches gespeichert sind, in dem externen Speicher gesichert werden, Auswählen einer Cache-Zeile aus den Cache-Zeilen, in denen gespeicherte Daten in dem externen Speicher gesichert werden; Schreiben der Schreibdaten in die ausgewählte Cache-Zeile und Markieren der Schreibdaten als gültig.

5. Verfahren nach Anspruch 1, wobei das Verfahren ferner umfasst:
Ausgeben der HARQ-Daten direkt nach dem Lesen der HARQ-Daten aus dem externen Speicher gemäß dem Lesebefehl;
wobei das Speichern der Schreibdaten gemäß dem Schreibbefehl umfasst:
wenn die nicht-letzte Neuübertragung auf der Grundlage des HARQ durchgeführt wird, nach dem Lesen der HARQ-Daten gemäß dem Lesebefehl, Speichern der Schreibdaten gemäß dem Schreibbefehl.

6. Verfahren nach Anspruch 1, ferner umfassend: wenn festgestellt wird, dass eine Cache-Zeile, die einem Aging-Prozess unterzogen werden muss, in dem HARQ-Daten-Cache vorhanden ist, Markieren von in der Cache-Zeile, die einem Aging-Prozess unterzogen werden muss, gespeicherten Daten als ungültig, wobei die als ungültig markierten Daten freizugebende Daten sind;
wobei die Cache-Zeile, die einem Aging-Prozess unterzogen werden muss, eine Cache-Zeile ist, die die folgende Bedingung erfüllt: eine Datenspeicherdauer übersteigt eine Erneuerungsschwelle.

7. Hybride automatische Wiederholungsanforderungs- (Hybrid Automatic Repeat Request, HARQ) Datenspeicherverwaltungsvorrichtung, die in einem LTE- oder 5G-System arbeitet, wobei sich die Vorrichtung in einem HARQ-Datencache befindet und eine Empfangseinheit und eine Verarbeitungseinheit umfasst,
wobei eine Empfangseinheit (901), so konfiguriert ist, dass sie Betriebssteuerungsinformationen empfängt, wenn bestimmt wird, dass eine erste Übertragung oder eine Neuübertragung auf der Grundlage von HARQ durchgeführt wird, wobei, wenn die erste Übertragung oder eine nicht-letzte Neuübertragung auf der Grundlage von HARQ durchgeführt wird, die empfangenen Betriebssteuerungsinformationen einen Schreibbefehl und Schreibdaten umfassen und die jedes Mal empfangenen Schreibdaten fehlerhaft decodierte HARQ-Daten sind;
wobei eine Verarbeitungseinheit (902) so konfiguriert ist, dass sie die Schreibdaten gemäß dem Schreibbefehl speichert, wenn bestimmt wird, dass eine erste Übertragung oder eine nicht-letzte Neuübertragung auf der Grundlage des HARQ durchgeführt wird,
wobei, wenn die nicht-letzte Neuübertragung auf der Grundlage von HARQ durchgeführt wird, die empfangene Betriebssteuerungsinformation ferner einen Lesebefehl umfasst; wenn die letzte Neuübertragung auf der Grundlage von HARQ durchgeführt wird, die empfangene Betriebssteuerungsinformation ein Lesebefehl ist;
dementsprechend ist die Verarbeitungseinheit (902) ferner so konfiguriert, dass sie die HARQ-Daten gemäß dem Lesebefehl liest, wenn festgestellt wird, dass die Neuübertragung auf der Grundlage des HARQ durchgeführt wird; **dadurch gekennzeichnet, dass** der HARQ-Daten-Cache eine Vielzahl von Cache-Zeilen zum Speichern von HARQ-Daten umfasst;
wobei die Verarbeitungseinheit (902) dementsprechend ferner konfiguriert ist, dass sie:
wenn ein Lesetreffer gemäß dem Lesebefehl festgestellt wird, HARQ-Daten aus einer dem Lesebefehl entsprechenden Cache-Zeile zu lesen; in der dem Lesebefehl entsprechenden Cache-Zeile gespeicherte Daten als ungültig zu markieren oder die in der dem Lesebefehl entsprechenden Cache-Zeile gespeicherten Daten freizugeben;
wenn ein Lesefehler gemäß dem Lesebefehl festgestellt wird, die HARQ-Daten aus dem externen Speicher gemäß dem Lesebefehl zu lesen.

8. Vorrichtung nach Anspruch 7, wobei der HARQ-Daten-Cache eine Vielzahl von Cache-Zeilen zum Speichern von HARQ-Daten umfasst;
wobei die Verarbeitungseinheit (902) dementsprechend ferner so konfiguriert ist, dass sie die Schreibdaten an einen externen Speicher ausgibt, wenn festgestellt wird, dass eine erste vorgegebene Bedingung erfüllt ist; wenn festgestellt wird, dass eine erste vorgegebene Bedingung nicht erfüllt ist, Schreiben der Schreibdaten in eine Cache-Zeile des HARQ-Daten-Caches;
wobei die erste vorgegebene Bedingung darin besteht, dass: ein Schreibfehler gemäß dem Schreibbefehl festgestellt wird und in jeder Cache-Zeile des HARQ-Daten-Caches gespeicherte Daten als gültig markiert werden und die in jeder Cache-Zeile des HARQ-Daten-Caches gespeicherten Daten nicht in dem externen Speicher gesichert werden.

9. Die Vorrichtung nach Anspruch 8, wobei
die Verarbeitungseinheit (902) ferner so konfiguriert ist, dass sie die Schreibdaten an den externen Speicher ausgibt, wenn festgestellt wird, dass die erste vorgegebene Bedingung nicht erfüllt ist und der Schreibbefehl anzeigt, dass die Schreibdaten in dem externen Speicher gespeichert werden müssen;
oder, wobei die Verarbeitungseinheit (902) ferner so konfiguriert ist, dass sie:
wenn ein Schreibtreffer gemäß dem Schreibbefehl festgestellt wird, die Schreibdaten in eine Cache-Zeile schreibt, die dem Schreibbefehl entspricht;
wenn ein Schreibfehler gemäß dem Schreibbefehl festgestellt wird und Daten, die in mindestens einer Cache-Zeile des HARQ-Datencaches gespeichert sind, als ungültig markiert werden, die Schreibdaten in jede Cache-Zeile schreibt, in der Daten gespeichert sind, die als ungültig markiert sind, und die Schreibdaten als gültig markiert;
wenn ein Schreibfehler gemäß dem Schreibbefehl festgestellt wird und Daten, die in jeder Cache-Zeile des HARQ-Daten-Caches gespeichert sind, als gültig markiert werden und Daten, die in mindestens einer Cache-Zeile des HARQ-Daten-Caches gespeichert sind, im externen Speicher gesichert werden, eine Cache-Zeile aus den Cache-Zeilen auswählt, in denen gespeicherte Daten im externen Speicher gesichert werden; die Schreibdaten in die ausgewählte Cache-Zeile schreibt und die Schreibdaten als gültig markiert.

10. Vorrichtung nach Anspruch 9, wobei die Verarbeitungseinheit (902) ferner so konfiguriert ist, dass sie die HARQ-Daten nach dem Lesen der HARQ-Daten aus einem externen Speicher gemäß dem Lesebefehl direkt ausgibt;
wobei die Verarbeitungseinheit (902) ferner so konfiguriert ist, dass sie, wenn bestimmt wird, eine nicht-letzte Neuübertragung auf der Grundlage von HARQ durchzuführen, nach dem Lesen der HARQ-Daten gemäß dem Lesebefehl die Schreibdaten gemäß dem Schreibbefehl speichert.

11. Vorrichtung nach Anspruch 7, wobei die Verarbeitungseinheit (902) ferner konfiguriert ist, dass sie: wenn festgestellt wird, dass eine Cache-Zeile, die einem Aging-Prozess unterzogen werden muss, in dem HARQ-Daten-Cache vorhanden ist, Daten, die in der Cache-Zeile, die einem Aging-Prozess unterzogen werden muss, gespeichert sind, als ungültig markiert, wobei die als ungültig markierten Daten, Daten sind, die freigegeben werden sollen; die Cache-Zeile, die einem Aging-Prozess unterzogen werden muss, eine Cache-Zeile ist, die die folgende Bedingung erfüllt: eine Datenspeicherdauer übersteigt einen Erneuerungsschwellenwert.

## Revendications

1. Procédé de gestion du stockage des données HARQ (Hybrid Automatic Repeat request), fonctionnant dans un système LTE (Long Term Evolution) ou 5G, appliquée à un cache de données HARQ, le procédé comprenant :
recevoir des informations de commande d'opération lors de la première transmission ou de la retransmission sur la base d'une HARQ, dans laquelle, lors de la première transmission ou de la non-dernière retransmission sur la base de la HARQ, les informations de commande d'opération reçues comprennent une commande d'écriture et des données d'écriture, et les données d'écriture reçues à chaque fois sont des données HARQ incorrectement décodées (401) ;
lors de la première retransmission ou de la non-dernière retransmission sur la base de la HARQ, stocker les données d'écriture conformément à la commande d'écriture (402),
lorsque la non-dernière retransmission est effectuée sur la base de HARQ,
l'information de commande d'opération reçue comprend en outre une commande de lecture ; lorsque la dernière retransmission est effectuée sur la base de HARQ, l'information de commande d'opération reçue est une commande de lecture ;
en conséquence, le procédé comprend en outre :
lorsque la retransmission est effectuée sur la base de la HARQ, lire les données HARQ conformément à la commande de lecture ;
**caractérisé en ce que** le cache de données HARQ comprend une pluralité de lignes de cache pour stocker des données HARQ ;
en conséquence, l'étape de lecture des données HARQ conformément à la commande de lecture comprend :
lorsqu'un succès de lecture est déterminé en fonction de la commande de lecture, lire les données HARQ d'une ligne de cache correspondant à la commande de lecture ; marquer les données stockées dans la ligne de cache correspondant à la commande de lecture comme non valides, ou libérer les données stockées dans la ligne de cache correspondant à la commande de lecture ;
lorsqu'un manque de lecture est déterminé en fonction de la commande de lecture, lire les données HARQ de la mémoire externe en fonction de la commande de lecture.

2. Procédé selon la revendication 1, dans lequel le cache de données HARQ comprend une pluralité de lignes de cache pour stocker les données HARQ ; en conséquence, l'étape de stockage des données d'écriture conformément à la commande d'écriture comprend :
émettre les données d'écriture vers une mémoire externe lorsqu'il est déterminé qu'une première condition prédéterminée est satisfaite, et que la première condition prédéterminée est la suivante : déterminer un manque d'écriture en fonction de la commande d'écriture, les données stockées dans chaque ligne de cache du cache de données HARQ sont marquées comme étant valides, et les données stockées dans chaque ligne de cache du cache de données HARQ ne sont pas sauvegardées dans la mémoire externe ;
lorsqu'il est déterminé que la première condition prédéterminée n'est pas satisfaite, écrire les données d'écriture dans une ligne de cache du cache de données HARQ.

3. Procédé selon la revendication 2, dans lequel le procédé comprend en outre :
lorsqu'il est déterminé que la première condition prédéterminée n'est pas satisfaite et que la commande d'écriture indique que les données d'écriture doivent être stockées dans la mémoire externe, émettre des données d'écriture vers la mémoire externe.

4. Procédé selon la revendication 2, dans lequel l'étape d'écriture des données d'écriture dans une ligne de cache du cache de données HARQ lorsqu'il est déterminé que la première condition prédéterminée n'est pas satisfaite comprend :
lorsqu'un succès d'écriture est déterminé en fonction de la commande d'écriture, écrire les données d'écriture dans une ligne de cache correspondant à la commande d'écriture ;
lorsqu'un manque d'écriture est déterminé en fonction de la commande d'écriture et que les données stockées dans au moins une ligne de cache du cache de données HARQ sont marquées comme non valides, écrire les données d'écriture dans chaque ligne de cache stockant des données marquées comme non valides, et marquer les données d'écriture comme valides ;
déterminer un manque d'écriture en fonction de la commande d'écriture, dans lequel les données stockées dans chaque ligne de cache du cache de données HARQ sont marquées comme valides, et lorsque les données stockées dans au moins une ligne de cache du cache de données HARQ sont sauvegardées dans la mémoire externe, sélectionner une ligne de cache parmi les lignes de cache dans lesquelles les données stockées sont sauvegardées dans la mémoire externe ; écrire les données d'écriture dans la ligne de cache sélectionnée, et marquer les données d'écriture comme étant valides.

5. Procédé selon la revendication 1, dans lequel le procédé comprend en outre :
émettre les données HARQ directement après avoir lu les données HARQ de la mémoire externe conformément à la commande de lecture ;
dans lequel stocker les données d'écriture conformément à la commande d'écriture comprend :
lorsque la non-dernière retransmission est effectuée sur la base de la HARQ, après avoir lu les données HARQ conformément à la commande de lecture, stocker les données d'écriture conformément à la commande d'écriture.

6. Procédé selon la revendication 1, comprenant en outre : lorsqu'il est déterminé qu'une ligne de cache devant être vieillie existe dans le cache de données HARQ, marquer des données stockées dans la ligne de cache devant être vieillie comme non valides, les données marquées comme non valides étant des données à libérer ; la ligne de cache devant être vieillie est une ligne de cache satisfaisant à la condition suivante : une durée de stockage des données est supérieure à un seuil de vieillissement.

7. Dispositif de gestion du stockage des données HARQ (Hybrid Automatic Repeat request) fonctionnant dans un système LTE ou 5G, dans lequel le dispositif est situé dans un cache de données HARQ et qui comprend une unité de réception et une unité de traitement,
une unité de réception (901), configurée pour recevoir des informations de commande d'opération lorsqu'il est déterminé d'effectuer une première transmission ou une retransmission sur la base de HARQ, dans laquelle, lorsque la première transmission ou une non-dernière retransmission est effectuée sur la base de HARQ, les informations de commande d'opération reçues comprennent une commande d'écriture et des données d'écriture, et les données d'écriture reçues à chaque fois sont des données HARQ incorrectement décodées ;
une unité de traitement (902), configurée pour stocker les données d'écriture conformément à la commande d'écriture lorsqu'il est déterminé d'effectuer une première transmission ou une non-dernière retransmission sur la base du HARQ,
lorsque la non-dernière retransmission est effectuée sur la base de HARQ, l'information de commande d'opération reçue comprend en outre une commande de lecture ; lorsque la dernière retransmission est effectuée sur la base de HARQ, l'information de commande d'opération reçue est une commande de lecture ;
en conséquence, l'unité de traitement (902) est en outre configurée pour lire les données HARQ conformément à la commande de lecture lorsqu'il est déterminé que la retransmission est effectuée sur la base de la HARQ ; **caractérisé en ce que** le cache de données HARQ comprend une pluralité de lignes de cache pour stocker des données HARQ ;
en conséquence, l'unité de traitement (902) est en outre configurée pour :
lorsqu'un succès de lecture est déterminé en fonction de la commande de lecture, lire les données HARQ d'une ligne de cache correspondant à la commande de lecture ; marquer les données stockées dans la ligne de cache correspondant à la commande de lecture comme non valides, ou libérer les données stockées dans la ligne de cache correspondant à la commande de lecture ;
lorsqu'un manque de lecture est déterminé en fonction de la commande de lecture, lire les données HARQ de la mémoire externe en fonction de la commande de lecture.

8. Dispositif selon la revendication 7, dans lequel le cache de données HARQ comprend une pluralité de lignes de cache pour stocker des données HARQ ; en conséquence, l'unité de traitement (902) est en outre configurée pour émettre les données d'écriture vers une mémoire externe lorsqu'il est déterminé qu'une première condition prédéterminée est satisfaite; lorsqu'il est déterminé qu'une première condition prédéterminée n'est pas satisfaite, écrire les données d'écriture dans une ligne de cache du cache de données HARQ ; la première condition prédéterminée est la suivante :: un manque d'écriture est déterminé selon la commande d'écriture, et les données stockées dans chaque ligne de cache du cache de données HARQ sont marquées comme valides, et les données stockées dans chaque ligne de cache du cache de données HARQ ne sont pas sauvegardées dans la mémoire externe.

9. Dispositif selon la revendication 8, dans lequel l'unité de traitement (902) est en outre configurée pour émettre les données d'écriture vers la mémoire externe lorsqu'il est déterminé que la première condition prédéterminée n'est pas satisfaite et que la commande d'écriture indique que les données d'écriture doivent être stockées dans la mémoire externe ;
ou, dans lequel l'unité de traitement (902) est en outre configurée pour :
lorsqu'un succès d'écriture est déterminé en fonction de la commande d'écriture, écrire les données d'écriture dans une ligne de cache correspondant à la commande d'écriture ;
lorsqu'un manque d'écriture est déterminé en fonction de la commande d'écriture et que les données stockées dans au moins une ligne de cache du cache de données HARQ sont marquées comme non valides, écrire les données d'écriture dans chaque ligne de cache stockant des données marquées comme non valides, et marquer les données d'écriture comme valides ;
lorsqu'un manque d'écriture est déterminé en fonction de la commande d'écriture, que les données stockées dans chaque ligne de cache du cache de données HARQ sont marquées comme valides et que les données stockées dans au moins une ligne de cache du cache de données HARQ sont sauvegardées dans la mémoire externe, sélectionner une ligne de cache parmi les lignes de cache dans lesquelles les données stockées sont sauvegardées dans la mémoire externe ; écrire les données d'écriture dans la ligne de cache sélectionnée, et marquer les données d'écriture comme valides.

10. Dispositif selon la revendication 9, dans lequel l'unité de traitement (902) est en outre configurée pour émettre directement les données HARQ après avoir lu les données HARQ dans une mémoire externe conformément à la commande de lecture ;
l'unité de traitement (902) est en outre configurée pour, lorsqu'il est déterminé d'effectuer une non-dernière retransmission sur la base de HARQ, après avoir lu les données HARQ conformément à la commande de lecture, stocker les données d'écriture conformément à la commande d'écriture.

11. Le dispositif selon la revendication 7, dans lequel l'unité de traitement (902) est en outre configurée pour : lorsqu'il est déterminé qu'une ligne de cache devant être vieillie existe dans le cache de données HARQ, marquer les données stockées dans la ligne de cache devant être vieillie comme non valides, les données marquées comme non valides étant des données à libérer ; la ligne de cache devant être vieillie est une ligne de cache satisfaisant à la condition suivante : une durée de stockage des données est supérieure à un seuil de vieillissement.
